# EUROPEAN PATENT SPECIFICATION

(11) **EP 1 956 856 B1**
(45) Date of publication and mention of the grant of the patent: **10.11.2010**
(21) Application number: 07290145.7
(22) Date of filing: 06.02.2007
(51) Int. Cl.: H04W 24/00

(54) **Method of generating test response information by a communication device for a repeated control message decoding performance test, method of testing a control message decoding performance of a communication device, communication device, and test system**
Verfahren zur Erzeugung von Testantwort-Informationen durch eine Kommunikationsvorrichtung für einen wiederholten Leistungstest zur Dekodierung einer Steuernachricht, Verfahren zum Testen der Leistung einer Kommunikationsvorrichtung beim Dekodieren einer Steuernachricht, Kommunikationsvorrichtung und Testsystem
Procédé de génération d'informations de réponse au test par un dispositif de communication pour un test de performance à décodage de message à commande répétée, procédé de test d'une performance de décodage de message de commande pour un dispositif de communication, dispositif de communication, et système de test

(43) Date of publication of application: 13.08.2008
(73) Proprietor: Motorola, Inc., Schaumburg, IL 60196 (US)
(72) Inventor: Peyrusse, Olivier, 31000 Toulouse (FR); Gonorovsky, Ilkya O., Brunswick, NJ 08816 (US); Ligonnière, Philippe, 31500 Toulouse (FR)
(74) Representative: Cross, Rupert Edward Blount

(56) References cited:
- WO-A-02/075985
- US-A1- 2006 221 880
- US-B1- 6 914 944

## Description

### Field of the Invention

This invention relates to a method of generating test response information by a communication device for a repeated control message decoding performance test, a method of testing a control message decoding performance of a communication device, a communication device, and a test system.

### Background of the Invention

Wireless communication systems, for example cellular telephone or private mobile radio (PMR) communication systems, typically provide for radio communication links to be arranged between a network comprising a plurality of base stations (BSs) and a plurality of wireless communication devices, often termed mobile stations (MSs). The MS may be a portable or mobile telephone, a Personal Digital Assistant (PDA), a wireless video or multimedia device, a portable computer, or the like.

A 2nd generation cellular communication system known as the Global System for Mobile communication (GSM) is used widely throughout the world. A number of enhancements and additions have been introduced to the GSM communication system with one such enhancement being the General Packet Radio System (GPRS). The GPRS system has been standardised as an add-on to an existing GSM communication system. Another such enhancement to the GSM communication system is the Enhanced Data rates for GSM Evolution system, which is more commonly known as the EDGE system. A radio access network known as a GERAN (GSM/EDGE Radio Access Network) has been standardised. The GERAN allows for traditional GSM services to be provided as well as the enhanced services and performance provided by EDGE and GPRS.

In a GSM cellular system such as GERAN, traffic information, such as speech, video, SMS, etc and control information for controlling signalling between the MS and BS is communicated between a MS and a BS via radio frequency channels. Traffic messages are transmitted on traffic channels (TCH) and control messages are transmitted normally on control channels, such as Common Control Channel (CCCH), Broadcast Control Channel (BCCH), Slow Associated Control Channel (SACCH). The traffic and control messages are each arranged as multi-frame messages comprising a fixed number of frames, each of the frames comprising a number of time slots.

The SACCH channel is a stand-alone control channel and is associated with a traffic channel. The SACCH carries messages comprising general information between the MS and the BS. For example, on a downlink (i.e. a communication link from a BS to a MS), the SACCH is responsible for conveying slowly but regularly changing information such as transmit power level instructions and specific timing advance instructions to the MS.

A Fast Associated Control Channel (FACCH) channel carries urgent messages, for example to command a handover between cells and makes use of a traffic channel TCH itself.

During a call established between a MS and a BS over a radio communication link, the call quality is continuously monitored. When the call quality deteriorates below a predetermined threshold, radio link failure or radio link timeout is declared and the call is dropped.

In order to keep the impact of dropped calls on a user of the MS to a minimum, it is desirable to ensure that the call quality is maintained above the predetermined threshold. This can be achieved by improving the coding and/or decoding of the traffic and control signals.

Adaptive Multi-Rate AMR vocoders have been developed which improve the performance of decoding the speech on the traffic channels but has no affect on the decoding of the control messages. Thus, in a call where the speech quality is good, the call may still be dropped due to poor decoding of the control messages.

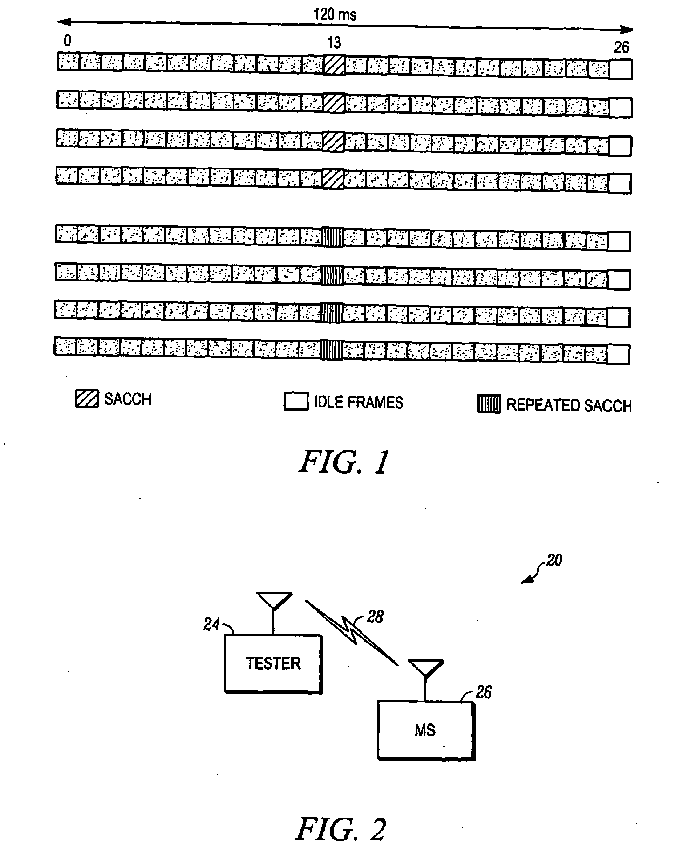

In order to improve the decoding of the SACCH messages, it has been proposed to use a solution in which SACCH frames are repeated, which solution is known as repeated SACCH. FIG. 1 is a schematic representation of a SACCH message that is repeated. As defined in the GERAN specification, a SACCH message block comprises four SACCH bursts or frames. One SACCH burst is sent every 26 frames (TCH multiframe), and thus, it takes 104 frames duration, which is 480ms, to transmit a SACCH message. The repetition of SACCH messages can be applied to both downlink and uplink (i.e. communication link from the MS to the BS). The decision as to whether repeated SACCH is activated is made by the network and this may be in response to a request from the MS. In addition, repeated SACCH can be enabled or disabled during a call depending on radio conditions.

As SACCH messages are repeated, it is possible to combine a repeated SACCH message with the original SACCH message, with the result that the decoding performance is improved. The gain obtained by using the repeated SACCH solution compared to a single SACCH is about 4dB. Note, the MS has no knowledge whether a downlink repeated SACCH is enabled or not by the network. When repeated SACCH is enabled, the MS also has no knowledge whether a received downlink SACCH frame is a repetition or not. Consequently, irrespective of whether repeated SACCH is enabled or whether the received SACCH frame is a repetition or not, a typical MS is arranged such that if a SACCH frame is badly decoded, the MS tries to combine it with a previously received SACCH frame.

As a further improvement to the user, repeated SACCH decoding performance requirements have been specified in 3GPP specification TR 45.005 V6.14.0 in April 2006. The performance requirements were obtained by running simulations and consist of Frame Error Rate (FER) levels under specific radio conditions, with the FER levels being computed by counting a SACCH frame and its repetition as one frame. The FER is defined as frame error count over frame count. Frame error count is incremented by one when neither a SACCH frame nor its repetition nor a combination of the SACCH frame and its repetition is decoded correctly.

The SACCH performance requirements are to be met by new MSs as part of their certification process prior to entry onto the market. Since SACCH performance has not been specified nor tested previously, a new test procedure is required to be defined for testing the MSs which includes a new test loop on the MS side to assess the repeated SACCH downlink performance and provides the necessary information to a tester for calculating the FER of the MS' repeated downlink SACCH decoding performance.

FACCH decoding performance is already tested and involves the MS replying to a downlink FACCH with an acknowledgement message to the tester when it is correctly decoded. Since there is no acknowledge on SACCH frames, such a method cannot be applied to testing SACCH decoding performance.

For traffic channels, TCH, the downlink stream is looped back in an uplink traffic channel, TCH, so the bit error rate BER can be computed by the tester. This kind of loop is quite complex if applied to the case of repeated SACCH due to the difference in payloads between the TCH and SACCH and to the fact that the loopback delay for the MS to report the SACCH performance on the uplink would have to be given to the tester for the SACCH performance tests.

Since the SACCH performance test requires simply computing the FER for the decoded repeated SACCH messages, there is a need for a test procedure which is not as complex as that already used for TCH performance testing.

Another example can be found in document US 6914944 (Nokkonen Esa), 5 July 2005.

### Summary of the Invention

In accordance with the present invention there is provided a method of generating test response information by a communication device for a repeated control message decoding performance test, as claimed in claim 1 of the accompanying claims.

In accordance with another aspect of the present invention there is provided a communication device for generating test response information as claimed in claim 9 of the accompanying claims.

In accordance with another aspect of the present invention there is provided a method of testing a repeated control message decoding performance of a communication device as claimed in claim 15 of the accompanying claims.

In accordance with another aspect of the present invention there is provided a test system for testing a repeated control message decoding performance of a communication device as claimed in claim 16 of the accompanying claims.

### Brief Description of the Drawings

A method of generating test response information by a communication device for a repeated control message decoding performance test in accordance with the invention, a method of testing a control message decoding performance of a communication device in accordance with the invention, a communication device in accordance with the invention, and a test system in accordance with the invention will now be described, by way of example only, with reference to the accompanying drawings in which:
FIG. 1 is a schematic diagram providing a representation of a SACCH message which is repeated when the serial SACCH solution is activated;
FIG. 2 is a block schematic diagram of a test system in accordance with the disclosure;
FIG. 3 is a block schematic diagram of a communication device in accordance with the disclosure;
FIG. 4 is a schematic diagram showing the flow for a method of testing a repeated SACCH message decoding performance of a communication device in accordance with the disclosure;
FIG. 5 is a diagrammatic representation of an exemplary format of test response information in accordance with the disclosure provided on an uplink SACCH message; and
FIG. 6 is a schematic diagram showing the flow of SACCH messages transmitted between a tester and a communication device in accordance with the disclosure.

### Detailed Description of the Drawings

The present disclosure will be described with reference to a GERAN system, but it will be appreciated that the present disclosure may apply to any wireless communication system e.g. PMR, GSM, EDGE, GPRS, Universal Mobile Telecommunication System (UMTS) or the like.

The present disclosure will be described with reference to repeating SACCH messages but it will be appreciated that the present disclosure may be used with other types of control messages that repeat.

FIG. 2 shows a test system 20 in accordance with the disclosure comprising a tester 24 and a communication device 26. The communication device 26 may be a portable or mobile telephone, a Personal Digital Assistant (PDA), a wireless video or multimedia device, a portable computer, or similar wireless communication device. In the following description, reference is made to a communication device comprising a Mobile Station (MS). The tester 24 includes a test bench for performing performance evaluations of new MS during certification prior to entry onto the market. The tester 24 may be a RF Test System such as the TS 8950 manufactured and supplied by Rohde & Schwarz. Such testers are well known in the art.

The tester 24 communicates with the MS 26 via a radio communication link 28. In order to test the repeated SACCH decoding performance of the MS 26, the tester 24 sends a test command in order to initiate a test mode in the MS 26 and repeated SACCH messages over the radio communication link 28 to the MS 26 and receives test response information from the MS 26. This will be described in more detail below.

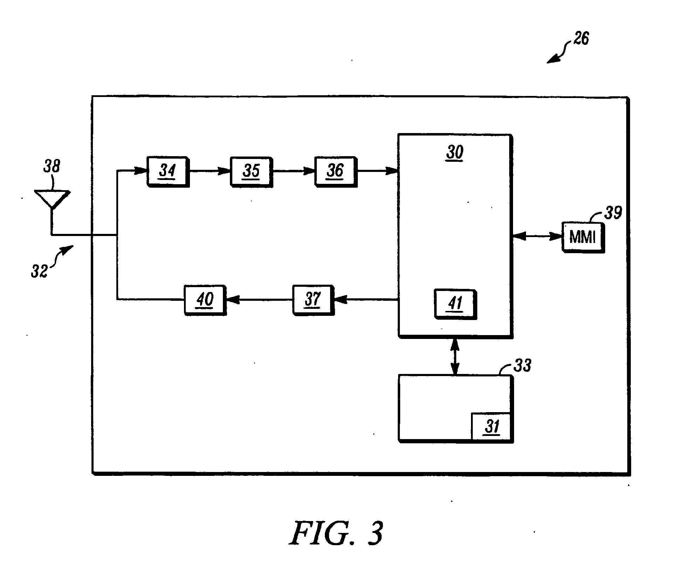

A diagram of the main functional components of an exemplary MS 26 in accordance with the disclosure is shown in FIG. 3. As will be apparent to a skilled person, only those functional components of the MS 26 that are necessary for an understanding of the invention have been shown and will be described.

The MS 26 comprises a processor 30 for carrying out operational processing for the MS. The MS 26 also has a communication section 32 for providing wireless communication with the tester 24 or when in operation in a communication system, a base station (not shown) as is well known in the art. The communication section 32 typically includes an antenna 38, and in the receive path, a demodulation section 34, a SACCH combining section 35 and decoding section 36, and in the transmit path, a coding section 37 and a modulation section 40, as will be known to a skilled person and thus will not be described further herein. The communication section 32 is coupled to the processor 30.

The MS 26 also has a Man Machine Interface MMI 39, including elements such as a key pad, microphone, speaker, display screen, for providing an interface between the MS and the user of the MS. The MMI 39 is also coupled to the processor 30.

The MS 26 further comprises a program memory 31 in which is stored programs containing processor instructions for operation of the MS 26. The program memory 31 is shown in FIG. 3 as a separate component of the MS 26 to the processor 30 but may be part of the processor itself. The programs in the program memory 31 may contain a number of different program elements or sub-routines containing processor instructions for a variety of different tasks, for example: for exchanging signals with the base station to establish a communication, for sending or receiving speech, text, multimedia or other data, for communicating with the user via the MMI 39. Specifically, a SACCH decode performance test element 33 for controlling the operation of the MS 26 during a SACCH message decode performance test is provided in accordance with the described embodiment. The operation of the test element 33 will be described below.

The MS 26 further comprises a counter 41 which may be part of the decoding section 36 or the processor 30 or some other part of the MS 26. The counter 41 may be implemented by means of a counter program (not shown) which may be stored in program memory 33 and executed by the processor 30. In such an embodiment, the counter program may be a sub-routine of the test element 33. In the exemplary embodiment, the counter 41 is implemented in the processor 30. On receipt of a new SACCH message, the MS 26 changes the value of the counter 41. The counter 41 is implemented such that the value of the counter 41 indicates whether the received SACCH message is a SACCH message or a repeat of the SACCH message. In the described embodiment, counter 41 is a modulo 2 counter and the value of the counter 41 is set to 0 on receipt of a SACCH message and set to 1 on receipt of a repeat of the SACCH message.

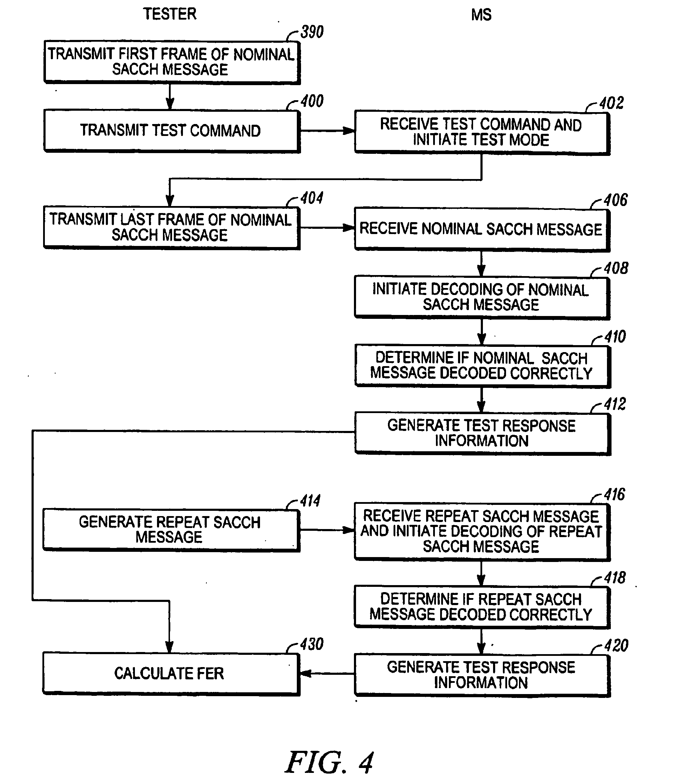

Referring now to FIG. 4 which is an exemplary process flow for a method of testing a repeated SACCH message decoding performance of a MS in accordance with the disclosure. It will be appreciated that the repeated SACCH feature by which SACCH messages are repeated is enabled on the downlink from the tester 24 to the MS 26 before starting the test procedure and uplink repeated SACCH is not enabled by the tester 24 at all during the test procedure.

The tester 24 begins the transmission of a SACCH message (comprising four SACCH frames) and transmits a first SACCH frame in step 390. The tester 24 transmits to the MS 26 a test command (step 400) on a FACCH to initiate a test mode in the MS 26. The tester 24 starts an internal T200 timer (not shown). On receipt and decoding of the test command, the MS 26 initiates a test mode in the MS 26, step 402 by triggering the test element 33, which then controls the sending of an acknowledgement message back to the tester 24 and the resetting of the value of the counter 41 to zero. Upon receipt of the acknowledgement message from the MS 26, the tester 24 stops the T200 timer. In the event an acknowledgement message is not received by the tester 24 and the timer times out, the tester 24 resends a test command to the MS 26, as per FACCH retransmission protocol. The test command is transmitted by the tester 24 at the same time as or during the sending of an original SACCH message, known as a nominal SACCH message and not a repeat of a SACCH message. As discussed above with reference to FIG. 1, a 480 ms SACCH transmission window is required in order to send four SACCH frames of a SACCH message. The timing of the sending of the test command is arranged such that the test command is sent on a FACCH message during the 480 ms SACCH transmission window such that the MS 26 is able to decode the test command and initiate the test mode before the nominal SACCH message sent during the same SACCH transmission window is decoded by the MS. In other words, the first FACCH frame, on which the test command is sent, is transmitted after the first SACCH frame of the nominal SACCH message is transmitted and the last FACCH frame, on which the test command is sent, is transmitted before the last SACCH frame is transmitted, step 404. In FIG. 4, only the transmission of the first and last SACCH frames of the nominal SACCH message are shown and the transmission of the second and third SACCH frames are not shown. This is to illustrate more clearly that the test command is transmitted at some point in the 480 ms SACCH transmission window.

Sending the test command when a nominal SACCH message is sent ensures that the MS 26 is synchronised to the receipt of repeat SACCH messages and that the MS 26 knows that the SACCH message received at step 406 after receipt of the test command (i.e. after initiating the test mode), is a nominal message and not a repeat of the SACCH message.

On receipt of the nominal SACCH message at step 406, the nominal SACCH message is demodulated in demodulation section 34 of the MS 26 and passed to decoding section 36. The MS 26 then initiates decoding of the received SACCH message, step 408. In step 410, the MS 26 determines whether the nominal SACCH message has been decoded correctly, step 410.

GSM codes information such that a cyclic redundancy code CRC is added to each frame of the coded information to be transmitted. When the MS 26 receives and initiates decoding of the frame, it verifies the CRC. If the CRC check fails, the frame is erased and not processed further. The rate at which frames are erased is known as the Frame Erasure Rate or Frame Error Rate FER and is used by the receiver to detect bad frames. With SACCH frames 40 bits are used for the CRC such that probability of detecting bad frames accurately is high. Thus, in order to determine whether a SACCH message has been decoded correctly step 410, a CRC check on the received nominal SACCH message in the decoding section 36 is performed.

In step 412, the MS 26 generates test response information which is transmitted to the tester 24 on a test response message such as an uplink SACCH message. The test response information provides information as to the decoding performance of the MS 26 for the received nominal SACCH message. More details of the test response information will be provided below.

The tester 24 transmits a repeat of the SACCH message at step 414, which is received by the MS 26 and decoding of the received repeat SACCH message is initiated, 416. When repeated SACCH is enabled, each SACCH frame of a SACCH message is repeated sequentially during a subsequent 480 ms SACCH transmission window. On receipt of a new SACCH message, the MS 26 sets the value of the counter 41 to 1. Thus, the MS 26 can determine from the value of the counter 41 whether the received SACCH message is a nominal SACCH message when the counter value is equal to 0 or a repeat of the SACCH message when the counter value is equal to 1.

The repeat of the SACCH message is demodulated in demodulation section 34 and passed to the decoding section 36 and to the SACCH combining section 35. The decoding section 36 determines whether the repeat of the SACCH message has been decoded correctly by performing a CRC check as described above, step 418. If the CRC check determines that the repeat SACCH message has been decoded incorrectly, then in the SACCH combining section 35, the received nominal SACCH message and repeat SACCH message are combined and treated as one SACCH message in order to provide the optimum decoding performance and the combined SACCH message is then passed to the decoder section 36 for decoding. The decoding section 36 determines whether the combined SACCH message has been decoded correctly by performing a CRC check as described above.

In step 420, the MS 26 generates test response information which is transmitted to the tester 24 on a test response message, such as an uplink SACCH message. The test response information provides information as to the decoding performance of the MS 26 for the received repeat SACCH message or a combination of the received nominal and repeat SACCH message.

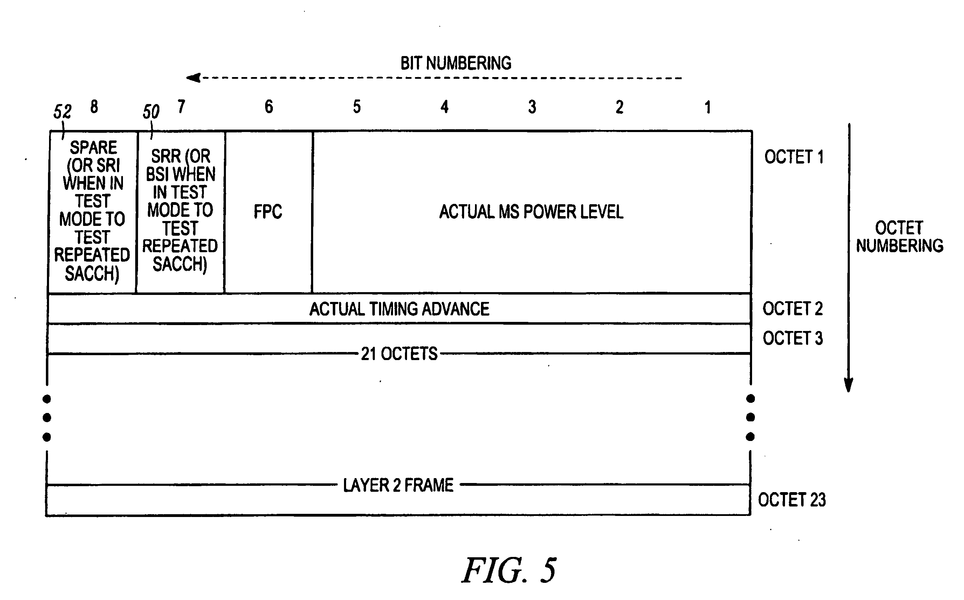

In an embodiment, the test response information is provided on an uplink SACCH message. An exemplary format for providing test response information on an uplink SACCH message is shown in FIG. 5. The test response information includes at least one first identifier bit 50, the Bad SACCH Indicator (BSI) bit in FIG. 5, and at least one second identifier bit 52, the SACCH Report Indicator (SRI) bit in FIG. 5, for indicating the validity of the at least one first identifier bit for performing test calculations. When the SRI bit is set to a first value, this indicates that the BSI bit is valid for performing test calculations and when the SRI bit is set to a second value, this indicates that the BSI bit is not valid for performing test calculations. The tester 24 uses the value of the SRI bit in order to determine what BSI bits can be used in the test calculations and what BSI bits can be ignored. The BSI bit indicates whether at least one of the nominal SACCH message and the repeat SACCH message has been decoded correctly and may also indicate when the nominal and repeat SACCH messages are combined, whether the combined SACCH message has been decoded correctly. The test element 33 in the program memory 33 controls the setting of the values of the SRI and BSI bits during a test mode and is triggered by the receipt of the test command.

In the described embodiment, under the control of the test element 33 and depending on the CRC check in the decoding section 36, the value of the BSI bit is set to 0 when one of the nominal SACCH message, the repeat of the nominal SACCH message (and if the nominal and repeat SACCH messages are combined, the combined SACCH message is decoded correctly). In the case when none of the SACCH messages are decoded correctly, the value of the BSI bit is set to 1.

Under the control of the test element 33 and knowing whether a received SACCH message is a nominal SACCH message or a repeat SACCH message from the value of the counter 41, the MS 26 sets the SRI bit to 0 on receipt of a nominal SACCH message and sets the SRI bit to 1 in response to receiving the repeat SACCH message. When the SRI bit value of test response information is 0, this indicates that the BSI bit of the test response information is not valid and when the SRI bit value of test response information is 1, this indicates that the BSI bit of the test response information is valid.

It will be appreciated that the indications of the values of the BSI and SRI bits can be inverted e.g. the SRI bit set to 0 when the BSI bit reflects decoding of a nominal SACCH message and its repeat or more than one bit may be used.

When the MS 26 is not in a test mode, the SRI bit of the uplink SACCH message is a spare bit that is not used (its default value is 0) and the BSI bit is named SACCH Repetition Request (SRR) and is used to signal the downlink quality of the SACCH message to the network.

Returning to the flow of FIG. 4, the tester, in step 430, calculates a FER of decoding repeated SACCH messages using the information provided in the test response information provided by the MS 26 during the test mode. More particularly, the FER is calculated using the values of the BSI bits of test response information which are indicated as valid by the SRI bits of the test response information. As discussed above, the FER is defined as frame error count over frame count. Frame error count is incremented by one when neither a nominal SACCH message nor the repeat SACCH message (nor, when the nominal and repeat SACCH messages are combined, a combination of the nominal SACCH message and its repetition) is decoded correctly.

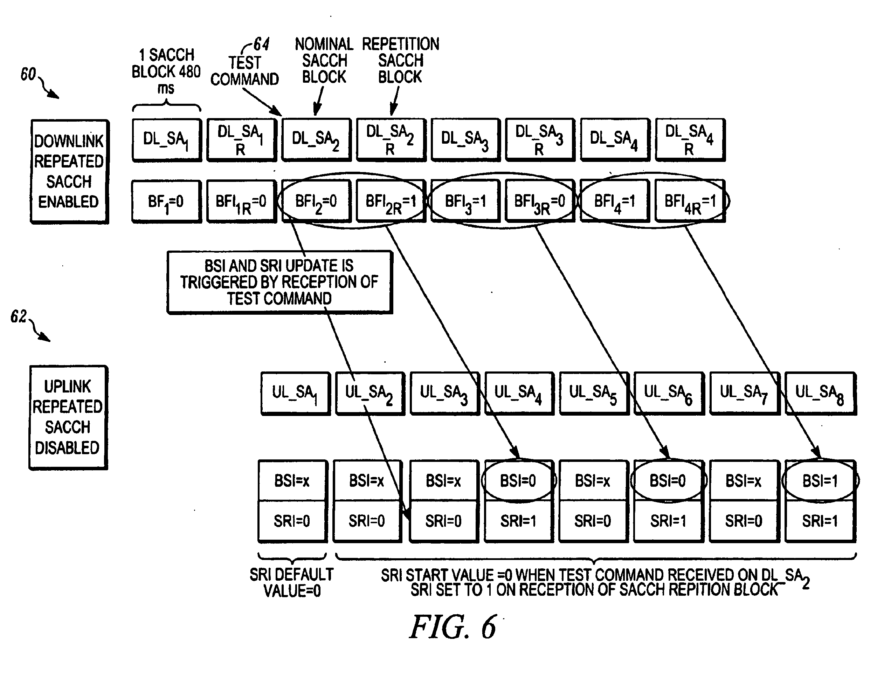

FIG. 6 shows the flow of repeated SACCH messages during a test procedure with repeated SACCH enabled on the downlink in accordance with the disclosure.

The SACCH messages shown in line 60 are repeated SACCH messages transmitted on a downlink to the MS 26 and the SACCH messages shown in line 62 are SACCH messages transmitted by the MS 26 on an uplink.

The tester 24 sends a test command 64 on a FACCH to the MS 26 and also sends a downlink SACCH message DL_SA₂. In response to receiving and decoding the test command 64, the MS 26 initiates the test mode and triggers the test element 33. The downlink SACCH message DL_SA₂ is decoded by the MS 26 and a Bad Frame Indicator (BFI) bit is set according to whether the SACCH message was decoded correctly as determined by a CRC check. The BFI bit is set to 1 when a SACCH message is decoded badly (even after combination with a previous SACCH message) and is set to 0 when a SACCH message is decoded correctly.

In the test mode and in response to receiving and decoding the downlink SACCH message DL_SA₂, the MS 26 generates test response information on the uplink SACCH message UL_SA₃, in order to signal to the tester whether the received SACCH message has been decoded or not. Since the repeat of the SACCH message has not been received and decoded as indicated to the MS 26 by the counter value 41, the MS 26 sets the SRI bit in the test response information on UL_SA₃ to 0 to indicate that the BSI bit is not valid for performing test calculations. The tester on receipt of the test response information on UL_SA₃ will determine that the SRI bit is set to 0 and will then ignore the BSI bit of the test response information on UL_SA₃ when performing FER test calculations.

The MS 26 receives and decodes a subsequent downlink SACCH message DL_SA_{2R} and then generates a test response information on the uplink SACCH message UL_SA₄. From the value of the counter 41 which has been updated on receipt of the subsequent downlink SACCH message DL_SA_{2R}, the MS 26 knows that this subsequent downlink message SACCH message DL_SA_{2R} is a repeat of the SACCH message DL_SA₂. The MS 26 therefore sets the SRI bit in the test response information on UL_SA₄ to 1 to indicate that the BSI bit is valid for performing test calculations and sets the BSI bit according to the results of the decoding of the downlink SACCH message DL_SA₂ and its repeat DL_SA_{2R} as indicated by the BFI bits, BFI₂ and BFI_{2R}. In this case, since the downlink SACCH message DL_SA₂ was decoded correctly as indicated by the BFI₂ bit being set to 0, the MS 26 sets the BSI bit to 0. The tester on receipt of the test response information on UL_SA₄ will determine that the SRI bit is set to 1 and will then check and use the value of the BSI bit of the test response information on UL_SA₄ when performing FER test calculations.

The procedure is repeated for subsequent downlink SACCH messages DL_SA₃, DL_SA_{3R}, DL_SA4, DL_SA_{4R}, etc. As can be seen from the BFI bits for the downlink SACCH messages DL_SA₃ and DL_SA_{3R}, and the BSI bit in the test response information on UL_SA₆, the downlink SACCH message DL_SA₃ was not decoded correctly but the repeat DL_SA_{3R} or the combination of the downlink SACCH message DL_SA₃ and the repeat DL_SA_{3R} was decoded correctly. As can be seen from the BFI bits for the downlink SACCH messages DL_SA₄ and DL_SA_{4R}, and the BSI bit in the test response information on UL_SA₈, not one of the downlink SACCH message DL_SA₄, the repeat DL_SA_{4R}, or the combination of the downlink SACCH message DL_SA₄ and the repeat DL_SA_{4R} was decoded correctly.

As can be seen by the staggering of the downlink line 60 and uplink line 62 in FIG. 6, there is a delay between the receipt of the downlink SACCH message DL_SA₂ and the transmitting of the test response information on UL SA₃. The length of the delay depends on the MS 26 and will vary between different types of MS. Since the SRI bit in the test response information is used to indicate to the tester whether the BSI bit is valid or not for performing test calculations, the delay for the MS to close the loop and transmit test response information does not matter. Thus, an advantage of the method in accordance with the disclosure is that it is robust for any type of communication devices.

By default (when the test mode is not activated), on receipt of a SACCH message, the MS 26 will try decoding the received SACCH message in decoding section 36 and will then perform a CRC check to determine whether the received SACCH message has been decoded correctly. If this decoding fails, since the MS 26 does not know whether a received SACCH message is a nominal SACCH message or a repetition, the MS 26 will combine the received SACCH message with a previously received SACCH message in the combining section 35, irrespective of whether the received SACCH is a nominal SACCH message or a repeat SACCH message. For the case when the received SACCH message is a repetition, the combining will improve the SACCH message decoding performance. This default situation can be applied to when the test mode is activated wherein if the decoding of the received SACCH message fails, irrespective of whether the received SACCH is a nominal SACCH message or a repeat SACCH message, the received SACCH message is combined with a previously received SACCH message. As an alternative solution when the test mode is activated, identifying whether the message is repeated or not by way of the value of counter 41 can be performed prior to the CRC check such that the MS 26 in accordance with the described embodiment combines repeated messages in attempt to improve the chances of decoding correctly the received message prior to the CRC check but does not combine nominal or original SACCH messages, identified by the value of the counter 41, with previously received SACCH messages. Combining messages to gain diversity is a technique well known in the art. It will be appreciated however that alternative techniques may also be used e.g. when the CRC check is performed prior to identifying whether a message is repeated or not. Furthermore, other methods for determining whether a received message has been decoded correctly or not may also be used instead of or in addition to a CRC check.

In summary, the present disclosure provides a method of generating test response information by a communication device for a repeated SACCH message decoding performance test. The method initiates a test mode in the communication device in response to receiving a test command and receives a SACCH message following reception of the test command. On receipt of the SACCH message, the communication device initiates or attempts decoding of the SACCH message. A repeat of the SACCH message is subsequently received and decoding of the repeat SACCH message is initiated. The communication device generates test response information including at least one first identifier bit having a value which indicates whether at least one of the SACCH message and the repeat SACCH message has been decoded correctly and at least one second identifier bit for indicating the validity of the at least one first identifier bit for performing test calculations.

By sending the test command and initiating the test mode in the communication device, prior to receipt of the SACCH message (as opposed to the repeat of the SACCH message), the communication device in accordance with the disclosure can be synchronised to the receipt of the repeat SACCH message without the need for additional steps to distinguish nominal SACCH messages from repeat SACCH messages.

By using the second identifier bit in the test response information to indicate the validity of the first identifier bit in the test response information, only the values of the first identifier bits which are identified as valid are used in the performance of the test calculations. In addition, the first identifier bit has a value which indicates whether at least one of the SACCH message and the repeat SACCH message has been decoded correctly and thus, provides information where two SACCH messages are considered as one message. Thus, the method in accordance with the disclosure can simply account for the performance testing of repeated SACCH messages where a SACCH message and a repeat of the SACCH message is treated as one message.

Thus, a simple method for testing repeated SACCH performance in a communication device is disclosed which method does not need complex test loops nor newly defined message formats.

## Claims

1. A method of generating test response information by a communication device for a repeated control message decoding performance test, the method comprising the steps of:
receiving a test command to initiate a test mode in the communication device;
receiving a control message following reception of the test command;
initiating decoding of the control message;
receiving a repeat of the control message and initiating decoding of the repeat control message;
generating test response information **characterized in** the test response information including at least one first identifier bit having a value which indicates whether at least one of the control message and the repeat control message has been decoded correctly and at least one second identifier bit for indicating the validity of the at least one first identifier bit for performing test calculations.

2. The method according to claim 1, wherein the at least one second identifier bit has a first value when the at least one first identifier bit is valid for performing test calculations and a second value when the at least one first identifier bit is not valid.

3. The method according to claim 2, further comprising the step of setting the at least one second identifier bit to the second value in response to receiving the control message and setting the at least one second identifier bit to the first value in response to receiving the repeat control message.

4. The method according to claim 1, 2 or 3, further comprising the steps of:
setting a counter to a value in response to receiving a control message after initiating the test mode; and
changing the value of the counter on receipt of a subsequent control message, wherein the value of the counter indicates whether the received control message is a control message or a repeat of the control message.

5. The method according to any preceding claim, wherein the control message comprises a plurality of control frames and wherein the method further comprising the steps of:
receiving a first control frame of the control message prior to receiving the test command; and
decoding the test command and initiating the test mode in the communication device prior to receipt of a last control frame of the control message.

6. The method according to any preceding claim, further comprising the steps of:
combining the received control message and the received repeat control message;
initiating decoding of the combined control message, wherein the value of the at least one first identifier bit indicates whether at least one of the control message, the repeat control message and the combined control message has been decoded correctly.

7. The method according to any preceding claim, further comprising the steps of:
generating first test response information in response to decoding the control message, wherein the value of the second identifier bit of the first test response information indicates that the at least one first identifier bit of the first test response information is not valid for performing test calculations; and
generating second test response information in response to decoding the repeat control message, wherein the value of the second identifier bit of the second test response information indicates that the at least one first identifier bit of the second test response information is valid for performing test calculations.

8. The method according to any preceding claim, wherein test response information is provided by the communication device on uplink SACCH messages.

9. A communication device for generating test response information for indicating whether the communication device has decoded correctly repeating control messages, the communication device comprising:
receiving means for receiving a test command to initiate a test mode in the communication device and for receiving a control message following reception of the test command;
means for initiating decoding of the control message;
means for receiving a repeat of the control message and for initiating decoding of the repeat control message;
processing means for generating test response information **characterized in** the test response information including at least one first identifier bit having a value which indicates whether at least one of the control message and the repeat control message has been decoded correctly and at least one second identifier bit for indicating the validity of the at least one first identifier bit for performing test calculations.

10. The communication device according to claim 9, wherein the at least one second identifier bit has a first value when the at least one first identifier bit is valid for performing test calculations and a second value when the at least one first identifier bit is not valid.

11. The communication device according to claim 10, wherein the processing means is arranged to set the at least one second identifier bit to the second value in response to receiving the control message and for setting the at least one second identifier bit to the first value in response to receiving the repeat control message.

12. The communication device according to claim 9 10, or 11, further comprising a counter, wherein the communication device is arranged to set a value of the counter in response to receiving a control message after initiating the test mode and to change the value of the counter on receipt of a subsequent control message, wherein the value of the counter indicates whether the received control message is a control message or a repeat of the control message.

13. The communication device according to claim 9, 10, 11 or 12, further comprising:
a combining section for combining the received control message and the received repeat control message; and
means for initiating decoding of the combined control message, wherein the value of the at least one first identifier bit indicates whether at least one of the control message, the repeat control message and the combined control message has been decoded correctly.

14. The communication device according to any one of claims 9-13, wherein the communication device is arranged to provide test response information on uplink SACCH messages.

15. A method of testing a repeated control message decoding performance of a communication device comprising:
transmitting a test command to initiate a test mode in a communication device and a control message;
transmitting a repeat of the control message;
receiving test response information from the communication device generated according to the method of any one of claims 1-8; and
calculating for the communication device a Frame Error Rate of decoding control messages using the values of the at least one first identifier bits of the test response information which are indicated as valid by the at least one second identifier bits of the test response information.

16. A test system for testing a repeated control message decoding performance of a communication device comprising:
a tester for transmitting a test command to initiate a test mode in a communication device and a control message and for transmitting a repeat of the control message; and
a communication device for generating test response information for indicating whether the communication device has decoded correctly repeating control messages according to any one of the claims 9-14,
wherein the tester is arranged to receive test response information from the communication device and calculate for the communication device a Frame Error Rate of decoding control messages using the values of the at least one first identifier bits of the test response information which are indicated as valid by the at least one second identifier bits of the test response information.

17. The method according to any one of claims 1-8, the communication device according to any one of claims 9-14, the method according to claim 15, and the test system according to claim 16, wherein the control message is a SACCH message and the repeat of the control message is a repeat of the SACCH message.

## Patentansprüche

1. Verfahren zur Erzeugung von Testantwort-Informationen durch eine Kommunikationsvorrichtung für einen Leistungstest zur Dekodierung einer wiederholten Steuernachricht, wobei das Verfahren die folgenden Schritte aufweist:
Empfang eines Testbefehls zur Einleitung eines Testmodus in der Kommunikationsvorrichtung;
Empfang einer Steuernachricht im Anschluss an den Empfang des Testbefehls;
Einleitung einer Dekodierung der Steuernachricht;
Empfang einer Wiederholung der Steuernachricht und Einleitung einer Dekodierung der Wiederholungs-Steuernachricht;
Erzeugung von Testantwort-Informationen, **dadurch gekennzeichnet, dass** die Testantwort-Informationen zumindest ein erstes Kennungs-Bit mit einem Wert einschließen, welcher anzeigt, ob zumindest entweder die Steuernachricht oder die Wiederholungs-Steuernachricht richtig dekodiert worden ist, und zumindest ein zweites Kennungs-Bit einschließen, um die Gültigkeit des zumindest einen ersten Kennungs-Bits zur Ausführung von Testberechnungen anzuzeigen.

2. Verfahren nach Anspruch 1, **dadurch gekennzeichnet, dass** das mindestens eine zweite Kennungs-Bit einen ersten Wert aufweist, wenn das mindestens eine erste Kennungs-Bit zur Ausführung von Testberechnungen gültig ist, und einen zweiten Wert aufweist, wenn das mindestens eine erste Kennungs-Bit nicht gültig bzw. zulässig ist.

3. Verfahren nach Anspruch 2, welches des Weiteren den Schritt der Einstellung des mindestens einen zweiten Kennungs-Bits auf den zweiten Wert ansprechend auf den Empfang der Steuernachricht aufweist, sowie die Einstellung des mindestens einen zweiten Kennungs-Bits auf den ersten Wert ansprechend auf den Empfang der Wiederholungs-Steuernachricht.

4. Verfahren nach Anspruch 1, 2 oder 3, welches des Weiteren die folgenden Schritte aufweist:
Einstellung eines Zählers auf einen Wert ansprechend auf den Empfang einer Steuernachricht nach Einleitung des Testmodus; und
Änderung des Werts des Zählers bei Empfang einer nachfolgenden Steuernachricht, wobei der Wert des Zählers anzeigt, ob die empfangene Steuernachricht eine Steuernachricht oder eine Wiederholung der Steuernachricht ist.

5. Verfahren nach einem der vorhergehenden Ansprüche, **dadurch gekennzeichnet, dass** die Steuernachricht eine Vielzahl von Steuerrahmen aufweist, und dass das Verfahren des Weiteren die folgenden Schritte aufweist:
Empfang eines ersten Steuerrahmens der Steuernachricht vor dem Empfang des Testbefehls; und
Dekodierung des Testbefehls und Einleitung des Testmodus in der Kommunikationsvorrichtung vor dem Empfang eines letzten Steuerrahmens der Steuernachricht.

6. Verfahren nach einem der vorhergehenden Ansprüche, welches des Weiteren die folgenden Schritte aufweist:
Kombinierung der empfangenen Steuernachricht und der empfangenen Wiederholungs-Steuernachricht;
Einleitung der Dekodierung der kombinierten Steuernachricht, wobei der Wert des mindestens einen ersten Kennungs-Bits anzeigt, ob zumindest entweder die Steuernachricht, die Wiederholungs-Steuernachricht oder die kombinierte Steuernachricht richtig dekodiert worden ist.

7. Verfahren nach einem der vorhergehenden Ansprüche, welches des Weiteren die folgenden Schritte aufweist:
Erzeugung erster Testantwort-Informationen ansprechend auf die Dekodierung der Steuernachricht, wobei der Wert des zweiten Kennungs-Bits der ersten Testantwort-Informationen anzeigt, dass das mindestens eine erste Kennungs-Bit der ersten Testantwort-Informationen zur Ausführung von Testberechnungen nicht gültig bzw. zulässig ist; und
Erzeugung zweiter Testantwort-Informationen ansprechend auf die Dekodierung der Wiederholungs-Steuernachricht, wobei der Wert des zweiten Kennungs-Bits der zweiten Testantwort-Informationen anzeigt, dass das mindestens eine erste Kennungs-Bit der zweiten Testantwort-Informationen zur Ausführung von Testberechnungen gültig bzw. zulässig ist.

8. Verfahren nach einem der vorhergehenden Ansprüche, **dadurch gekennzeichnet, dass** Testantwort-Informationen durch die Kommunikationsvorrichtung auf Uplink-SACCH-Nachrichten bereitgestellt sind.

9. Kommunikationsvorrichtung zur Erzeugung von Testantwort-Informationen, um anzuzeigen, ob die Kommunikationsvorrichtung Wiederholungs-Steuernachrichten richtig dekodiert hat, wobei die Kommunikationsvorrichtung Folgendes aufweist:
eine Empfangsvorrichtung zum Empfang eines Testbefehls, um einen Testmodus in der Kommunikationsvorrichtung einzuleiten, und zum Empfang einer Steuernachricht im Anschluss an den Empfang des Testbefehls;
eine Vorrichtung zur Einleitung der Dekodierung der Steuernachricht;
eine Vorrichtung zum Empfang einer Wiederholung der Steuernachricht und zur Einleitung der Dekodierung der Wiederholungs-Steuernachricht;
eine Verarbeitungsvorrichtung zur Erzeugung von Testantwort-Informationen, **dadurch gekennzeichnet, dass** die Testantwort-Informationen zumindest ein erstes Kennungs-Bit mit einem Wert einschließen, welcher anzeigt, ob zumindest entweder die Steuernachricht oder die Wiederholungs-Steuernachricht richtig dekodiert worden ist, und zumindest ein zweites Kennungs-Bit einschließen, um die Gültigkeit des mindestens einen ersten Kennungs-Bits zur Ausführung von Testberechnungen anzuzeigen.

10. Kommunikationsvorrichtung nach Anspruch 9, **dadurch gekennzeichnet, dass** das mindestens eine zweite Kennungs-Bit einen ersten Wert aufweist, wenn das mindestens eine erste Kennungs-Bit zur Ausführung von Testberechnungen gültig ist, und einen zweiten Wert, wenn das mindestens eine erste Kennungs-Bit nicht gültig bzw. zulässig ist.

11. Kommunikationsvorrichtung nach Anspruch 10, **dadurch gekennzeichnet, dass** die Verarbeitungsvorrichtung derart angeordnet ist, dass sie das mindestens eine zweite Kennungs-Bit auf den zweiten Wert ansprechend auf den Empfang der Steuernachricht einstellt, und dass sie das mindestens eine zweite Kennungs-Bit auf den ersten Wert ansprechend auf den Empfang der Wiederholungs-Steuernachricht einstellt.

12. Kommunikationsvorrichtung nach Anspruch 9, 10 oder 11, welche des Weiteren einen Zähler aufweist, **dadurch gekennzeichnet, dass** die Kommunikationsvorrichtung derart angeordnet ist, dass sie einen Wert des Zählers ansprechend auf den Empfang einer Steuernachricht nach der Einleitung des Testmodus einstellt, und dass sie den Wert des Zählers bei Empfang einer nachfolgenden Steuernachricht ändert, wobei der Wert des Zählers anzeigt, ob die empfangene Steuernachricht eine Steuernachricht oder eine Wiederholung der Steuernachricht ist.

13. Kommunikationsvorrichtung nach Anspruch 9,10,11 oder 12, welche des Weiteren Folgendes aufweist:
einen Kombinierungsabschnitt zur Kombinierung der empfangenen Steuernachricht und der empfangenen Wiederholungs-Steuernachricht; und
eine Vorrichtung zur Einleitung der Dekodierung der kombinierten Steuernachricht, wobei der Wert des mindestens einen ersten Kennungs-Bits anzeigt, ob zumindest entweder die Steuernachricht, die Wiederholungs-Steuernachricht oder die kombinierte Steuernachricht richtig dekodiert worden ist.

14. Kommunikationsvorrichtung nach einem der Ansprüche 9 bis 13, **dadurch gekennzeichnet, dass** die Kommunikationsvorrichtung zur Bereitstellung von Testantwort-Informationen auf Uplink-SACCH-Nachrichten angeordnet ist.

15. Verfahren zum Testen einer Leistung einer Kommunikationsvorrichtung zur Dekodierung einer Wiederholungs-Steuernachricht, wobei das Verfahren die folgenden Schritte aufweist:
Übertragung eines Testbefehls zur Einleitung eines Testmodus in einer Kommunikationsvorrichtung und einer Steuernachricht;
Übertragung einer Wiederholung der Steuernachricht;
Empfang von Testantwort-Informationen von der Kommunikationsvorrichtung, welche gemäß dem Verfahren nach einem der Ansprüche 1 bis 8 erzeugt worden sind; und
Berechnung einer Frame Error Rate oder Rahmenfehlerrate für die Kommunikationsvorrichtung bei der Dekodierung von Steuernachrichten unter Verwendung der Werte der mindestens einen ersten Kennungs-Bits der Testantwort-Informationen, welche durch das mindestens eine zweite Kennungs-Bit der Testantwort-Informationen als gültig angezeigt werden.

16. Testsystem zum Testen einer Leistung einer Kommunikationsvorrichtung bei der Dekodierung einer wiederholten Steuernachricht, wobei das Testsystem Folgendes aufweist:
eine Testvorrichtung zur Übertragung eines Testbefehls zur Einleitung eines Testmodus in einer Kommunikationsvorrichtung und einer Steuernachricht, und zur Übertragung einer Wiederholung der Steuernachricht; und
eine Kommunikationsvorrichtung zur Erzeugung von Testantwort-Informationen, um anzuzeigen, ob die Kommunikationsvorrichtung Wiederholungs-Steuernachrichten gemäß einem der Ansprüche 9 bis 14 richtig dekodiert hat,
**dadurch gekennzeichnet, dass** die Testvorrichtung zum Empfang von Testantwort-informationen von der Kommunikationsvorrichtung und zur Berechnung einer Frame Error Rate bzw. Rahmenfehlerrate für die Kommunikationsvorrichtung bei der Dekodierung von Steuernachrichten unter Verwendung der Werte des mindestens einen ersten Kennungs-Bits der Testantwort-Informationen angeordnet ist, welche von dem mindestens einen zweiten Kennungs-Bit der Testantwort-Informationen als gültig angezeigt werden.

17. Verfahren nach einem der Ansprüche 1 bis 8, Kommunikationsvorrichtung nach einem der Ansprüche 9 bis 14, Verfahren nach Anspruch 15 und Testsystem nach Anspruch 16, **dadurch gekennzeichnet, dass** die Steuernachricht eine Signalisierungskanal- bzw. SACCH-Nachricht ist und dass die Wiederholung der Steuernachricht eine Wiederholung der SACCH-Nachricht ist.

## Revendications

1. Procédé de génération d'informations de réponse au test par un dispositif de communication pour un test de performance à décodage de message à commande répété, le procédé comprenant les étapes de:
recevoir une commande de test pour initier un mode de test dans le dispositif de communication;
recevoir un message de commande à la suite de la réception de la commande de test;
initier le décodage du message de commande;
recevoir une répétition du message de commande et initier le décodage du message de commande répété;
produire des informations de réponse au test, **caractérisé en ce que** les informations de réponse au test incluant au moins un premier bit d'identificateur ayant une valeur qui indique si au moins un parmi le message de commande et le message de commande répété a été décodé correctement, et au moins un deuxième bit d'identificateur pour indiquer la validité du au moins un premier bit d'identificateur pour exécuter des calculs de test.

2. Procédé selon la revendication 1, dans lequel le au moins un deuxième bit d'identificateur a une première valeur lorsque le au moins un premier bit d'identificateur est valide pour exécuter les calculs de test et une deuxième valeur lorsque le au moins un premier bit d'identificateur n'est pas valide.

3. Procédé selon la revendication 2, comprenant en outre l'étape consistant à régler le au moins un deuxième bit d'identificateur à la deuxième valeur en réponse à la réception du message de commande et régler le au moins un deuxième bit d'identificateur à la première valeur en réponse à la réception du message de commande répété.

4. Procédé selon la revendication 1, 2 ou 3, comprenant en outre les étapes de:
régler un compteur à une valeur en réponse à la réception d'un message de commande après l'initiation du mode de test; et
changer la valeur du compteur lors de la réception d'un message de commande suivant, où la valeur du compteur indique si le message de commande reçu est un message de commande ou une répétition du message de commande.

5. Procédé selon l'une quelconque des revendications précédentes, dans lequel le message de commande comprend plusieurs trames de commande, et où le procédé comprend en outre les étapes de:
recevoir une première trame de commande du message de commande avant la réception de la commande de test; et
décoder la commande de test et initier le mode de test dans le dispositif de communication avant la réception d'une dernière trame de commande du message de commande.

6. Procédé selon l'une quelconque des revendications précédentes, comprenant en outre les étapes de:
combiner le message de commande reçu et le message de commande répété reçu;
initier le décodage du message de commande combiné, où la valeur du au moins un premier bit d'identificateur indique si au moins un parmi le message de commande, le message de commande répété et le message de commande combiné a été décodé correctement.

7. Procédé selon l'une quelconque des revendications précédentes, comprenant en outre les étapes de:
produire des premières informations de réponse au test en réponse au décodage du message de commande, où la valeur du deuxième bit d'identification des premières informations de réponse au test indique que le au moins un premier bit d'identificateur des premières informations de réponse au test n'est pas valide pour exécuter les calculs de test; et
produire des deuxième informations de réponse au test en réponse au décodage du message de commande répété, où la valeur du deuxième bit d'identification des deuxièmes informations de réponse au test indique que le au moins un premier bit d'identificateur des deuxièmes informations de réponse au test n'est pas valide pour exécuter les calculs de test.

8. Procédé selon l'une quelconque des revendications précédentes, dans lequel les informations de réponse au test sont fournies par le dispositif de communication sur des messages de liaison montante SACCH.

9. Dispositif de communication pour la génération d'informations de réponse au test pour indiquer si le dispositif de communication a décodé correctement les messages de commande répétés, le dispositif de communication comprenant:
des moyens de réception pour recevoir une commande de test pour initier un mode de test dans le dispositif de communication et pour recevoir un message de commande à la suite de la réception de la commande de test;
des moyens pour initier le décodage du message de commande;
des moyens pour recevoir une répétition du message de commande et pour initier le décodage du message de commande répété;
des moyens de traitement pour la génération d'informations de réponse au test, **caractérisé en ce que** les informations de réponse au test incluent au moins un premier bit d'identificateur d'une valeur qui indique si au moins un parmi le message de commande et le message de commande répété a été décodé correctement et au moins un deuxième bit d'identification pour indiquer la validité du au moins un premier bit d'identification pour exécuter les calculs de test.

10. Dispositif de communication selon la revendication 9, dans lequel le au moins un deuxième bit d'identification a une première valeur lorsque le au moins un premier bit d'identification est valide pour exécuter les calculs de test et une deuxième valeur lorsque le au moins un premier bit d'identification n'est pas valide.

11. Dispositif de communication selon la revendication 10, dans lequel le moyen de traitement est agencé pour régler le au moins un deuxième bit d'identification à la seconde valeur en réponse à la réception du message de commande et pour régler le au moins un deuxième bit d'identification à la première valeur en réponse à la réception du message de commande répété.

12. Dispositif de communication selon la revendication 9, 10 ou 11, comprenant en outre un compteur, où le dispositif de communication est agencé pour régler une valeur du compteur en réponse à la réception d'un message de commande après l'initiation du mode de test et pour changer la valeur du compteur lors de la réception d'un message de commande suivant, où la valeur du compteur indique si le message de commande reçu est un message de commande ou une répétition du message de commande.

13. Dispositif de communication selon la revendication 9, 10, 11 ou 12, comprenant en outre:
une section de combinaison pour combiner le message de commande reçu et le message de commande de répétition reçu; et
un moyen pour initier le décodage du message de commande combiné, où la valeur du au moins un premier bit d'identificateur indique si au moins un parmi le message de commande, le message de commande répété et le message de commande combiné a été décodé correctement.

14. Dispositif de communication selon l'une quelconque des revendications 9 à 13, dans lequel le dispositif de communication est agencé pour fournir des informations de réponse au test sur des messages de liaison montante SACCH.

15. Procédé pour tester une performance de décodage d'un message de commande répété d'un dispositif de communication, comprenant:
transmettre une commande de test pour initier un mode de test dans un dispositif de communication et un message de commande;
transmettre une répétition du message de commande;
recevoir des informations de réponse au test du dispositif de communication produites suivant le procédé selon l'une quelconque des revendications 1 à 8; et
calculer pour le dispositif de communication un Taux d'Erreur de la Trame de décodage de messages de commande en utilisant les valeurs des au moins un premier bit d'identification des informations de réponse au test qui sont indiquées comme étant valides par les au moins un deuxième bit d'identification des informations de réponse au test.

16. Système de test pour tester une performance de décodage d'un message de commande répété d'un dispositif de communication, comprenant:
un testeur pour transmettre une commande de test pour initier un mode de test dans un dispositif de communication et un message de commande et pour transmettre une répétition du message de commande; et
un dispositif de communication pour produire des informations de réponse au test pour indiquer si le dispositif de communication a décodé correctement les messages de commande répétés selon l'une quelconque des revendications 9 à 14,
où le testeur est agencé pour recevoir des informations de réponse au test du dispositif de communication et pour calculer pour le dispositif de communication un Taux d'Erreur de la Trame du décodage de messages de commande en utilisant les valeurs du au moins un premier bit d'identificateur des informations de réponse au test qui sont indiquées comme étant valides par le au moins un deuxième bit d'identificateur des informations de réponse au test.

17. Procédé selon l'une quelconque des revendications 1 à 8, le dispositif de communication selon l'une quelconque des revendications 9 à 14, le procédé selon la revendication 15 et le système de test selon la revendication 16, où le message de commande est un message SACCH, et la répétition du message de commande est une répétition du message SACCH.
